Europäisches Patentamt

European Patent Office

Office européen des brevets

(19)

(11) **EP 0 872 360 B1**

(12) **EUROPEAN PATENT SPECIFICATION**

(45) Date of publication and mention
of the grant of the patent:
**26.02.2003 Bulletin 2003/09**

(51) Int Cl.$^7$: **B60C 11/18**, B60C 19/08,
B60C 11/00, B60C 13/00

(21) Application number: **98104820.0**

(22) Date of filing: **17.03.1998**

(54) **"Antistatic tire"**

Antistatischer Reifen

Bandage pneumatique antistatique

(84) Designated Contracting States:
**DE ES FR GB IT**

(30) Priority: **18.03.1997 IT TO970229**
**18.03.1997 IT TO970230**

(43) Date of publication of application:
**21.10.1998 Bulletin 1998/43**

(73) Proprietor: **Bridgestone Corporation**
**Tokyo 104-8340 (JP)**

(72) Inventors:
• **Ducci, Stefano**
**00179 Roma (IT)**

• **Kondo, Yochiro**
**Tokyo 181 (JP)**
• **Straffi, Paolo**
**00149 Roma (IT)**
• **Silicani, José**
**00046 Grottaferrata (IT)**

(74) Representative: **Jorio, Paolo et al**
**STUDIO TORTA S.r.l.,**
**Via Viotti, 9**
**10121 Torino (IT)**

(56) References cited:
**EP-A- 0 242 755**     **EP-A- 0 681 931**
**EP-A- 0 847 880**     **CH-A- 597 008**
**DE-C- 820 543**     **GB-A- 551 657**

**Description**

The present invention relates to an antistatic tire.

More specifically, the present invention relates to an antistatic tire of the type comprising electric current conducting parts incorporated in the tire itself and for grounding the static electricity of a vehicle.

EP-A-718127 and EP-A-658452 relate to antistatic tires for grounding the static electricity of a vehicle, in which the tread and/or shoulders contain one or more electrically conducting elements defined laterally by a surface forming an annular portion of a rolling surface of the tread.

The tread and shoulders of a tire are normally made from different mixes, which react differently to the in-service stress to which they are subjected. That is, whereas the tread mix is designed to ensure a good dry and/or wet road-holding capacity, high resistance to wear and minimum rolling resistance, the shoulder mix, which does not normally come into contact with the road surface, acts as an interface element between the tread mix and that of the sidewall (on the tire carcass), and therefore normally has the same physical and chemical characteristics as the sidewall mix.

In the event the shoulder mix comes into contact with the road surface, however, its physical and chemical characteristics must be compatible with those of both the tread and sidewall mixes.

In known antistatic tires, the above two mixes are combined with a third mix forming the electrically conducting parts, which, as stated, define a rolling surface portion of the tread.

The addition of a third mix, however, involves several drawbacks, due to the wear of the conducting mix normally differing from that of the mix from which the element incorporating the conducting mix is formed, thus resulting in uneven wear of the rolling surface of the tire, which in turn results in uneven wear of the tire, and in vibration and noise discernible from inside the passenger compartment of the vehicle.

It is an object of the present invention to provide an antistatic tire designed to overcome the aforementioned drawbacks.

According to the present invention, there is provided an antistatic tire comprising a tread, two sidewalls, and two annular shoulders, each interposed between the tread and a respective said sidewall; the tread and the sidewalls being formed respectively from a first and second mix; and the tread defining part of a rolling surface, at least an annular portion of which is electrically conducting and has an electrical resistivity of less than $10^9$ ohms x cm; characterized in that said electrically conducting portion of the rolling surface is defined by an electrically conducting element formed from a third electrically conducting mix, which, under 1-10% elongation and in the cured state, has a stiffness or modulus which differs in percentage from the stiffness or modulus of said first mix in the cured state less than 10% in absolute value and, under 90-100% elongation, has a stiffness or modulus which differs in percentage from the stiffness or modulus of said second mix in the cured state less than +10%.

Preferably, said electrically conducting element includes said shoulders; and according to one preferred embodiment of the present invention, said electrically conducting portion is defined by said shoulders.

According to a further preferred embodiment of the present invention, said electrically conducting portion includes said shoulders and an electrically conducting member having an annular surface defining part of said rolling surface and being inserted inside the tread; said conducting member and said shoulders being both formed from said third electrically conducting mix.

Preferably, said third mix has, in the green state, substantially the same viscosity as said second mix in the green state.

Said third mix of the above tire preferably comprises:

- a polymer system similar to that of said first mix, so as to manifest a similar type of abrasion;
- a system of high-structure carbon black-based reinforcing fillers; said structure being defined by over 100 ml/100 gr absorption of dibutyl phthalate, and the carbon black being in quantities of over 30 phr (parts per 100 of polymer);
- an antioxidation system similar to that of said second mix;
- plasticizers and activating and curing systems as in normal tire mixes, and in such quantities as to achieve said mechanical characteristics under high and low strain.

The invention will now be described by way of examples with reference to the accompanying drawings, in which:

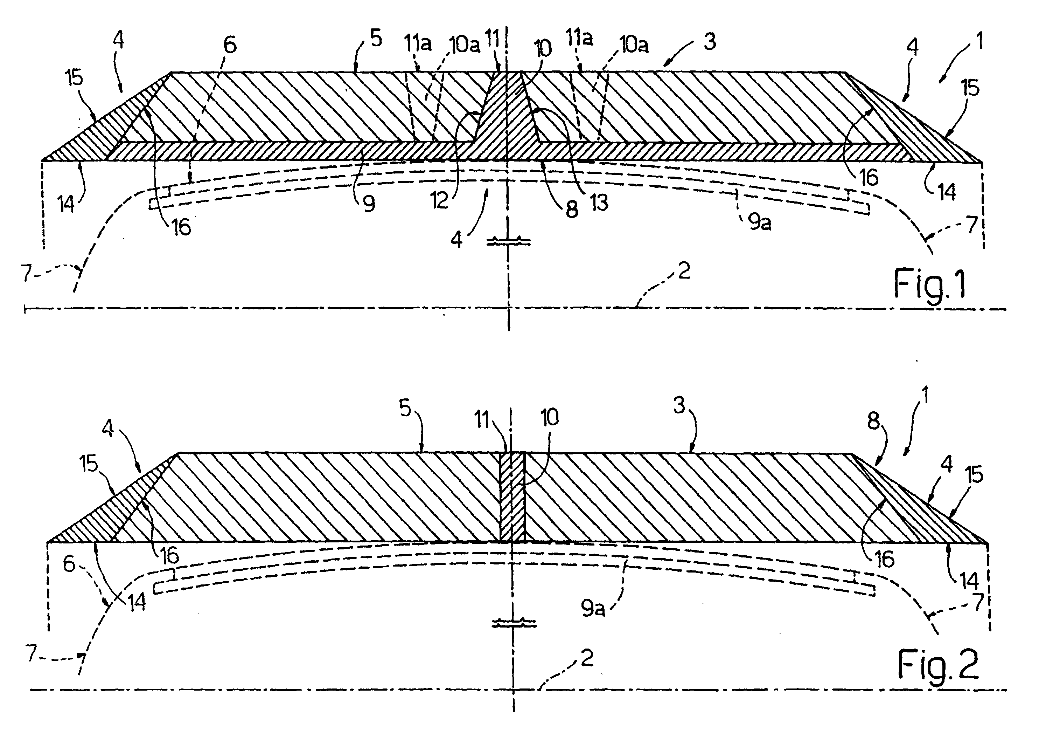

Figures 1, 2, 3 and 4 show schematic axial sections of respective preferred embodiments of the tire according to the present invention.

With reference to Figure 1, numeral 1 indicates a tire having an axis of rotation 2, and comprising an annular tread 3 having two lateral shoulders 4 and an outer rolling surface 5.

Tire 1 also comprises a carcass 6 supporting tread 3 and comprising sidewalls 7, on to part of which shoulders 4 of the finished tire 1 are folded.

Tread 3 is formed from an electrically insulating "MP1" mix, shoulders 4 from an electrically conducting "MPC" mix, and sidewalls 7 from a normally electrically conducting "MP2" mix.

Tire 1 further comprises an annular electrically conducting element 8, which includes shoulders 4 and further comprises a base 9 extending parallel to rolling surface 5 along the whole width of tread 3 and in contact with carcass 6, which is defined externally by a tread ply 9a reinforced with metal wires (not shown).

According to the embodiment shown in Figure 2, base 9 of Figure 1 is absent and its function is performed by electrically conductive tread belt 9a.

With reference to Figures 1 and 2, conducting element 8 also comprises a central insert 10 extending perpendicularly to rolling surface 5, and having a surface 11 extending along rolling surface 5 and inclined sides 12 and 13 diverging towards axis of rotation 2.

According to the embodiment in Figure 1, central insert 10 extends outwards from base 9 and is integral therewith; whereas, according to the embodiment of Figure 2, central insert 10 is in electric contact with tread belt 9a, and sides 12 and 13 are parallel to each other.

In a variation shown by the dotted lines in Figure 1, element 8 comprises a number of lateral inserts 10a, each of which is defined externally by a respective annular surface 11a defining a respective portion of surface 5.

In case of a tire having a tread provided with a central rib, the solution with the single central insert 10 is normally chosen; whereas, in case of a tire having a tread with a central groove, the solution with one or more lateral inserts 10a is to be chosen.

Surface 11 defines an electrically conducting strip which extends along rolling surface 5, and provides for establishing electrical contact between tire 1 and the road surface; while sides 12 and 13 provide for improving adhesion between conducting element 8 and the "MP1" mix of tread 3.

With reference to Figures 1 and 2, shoulders 4 are annular with a triangular section, and comprise a base 14 parallel to rolling surface 5, an outer surface 15 inclined with respect to axis 2, and an inner surface 16 contacting base 9 of conducting element 8 and inclined in the same direction as, but to a lesser degree than, surface 15, so as to intersect surface 15.

Conducting element 8 is formed from an electrically conducting "MPC" mix, which comprises a polymer system similar to that of the "MP1" tread mix, so as to manifest a similar type of abrasion, and a system of high-structure carbon black-based reinforcing fillers. The carbon black has a structure defined by over 100 ml/100 gr, and preferably over 120 ml/100gr, absorption of dibutyl phthalate, and is present in quantities of over 30 phr (parts per 100 of polymer).

The "MPC" mix also comprises an antioxidation system similar to that of the "MP2" sidewall mix; and plasticizers and activating and curing systems as in normal tire mixes.

The "MPC" mix so formed has an electrical resistivity of less than $10^9$ ohms x cm, while the "MP1" mix of tread 3 has an electrical resistivity of over $10^{11}$ ohms x cm.

The "MPC" mix components are present in such quantities that the "MPC" mix, under low strain (1-10% elongation) and in the cured state, has substantially the same mechanical characteristics in general, and substantially the same stiffness or modulus in particular, as the "MP1" tread mix in the cured state, and has a stiffness or modulus significantly higher than that of the "MP2" sidewall mix in the cured state; and, under high strain (90-100% elongation), has substantially the same mechanical characteristics in general, and substantially the same stiffness or modulus in particular, as the "MP2" sidewall mix in the cured state, and has a stiffness or modulus lower than that of the "MP1" tread mix in the cured state. In particular, the "MPC" mix components are present in such quantities that the "MPC" mix, under high strain, has a stiffness or modulus, which is greater than, but substantially equal to, the stiffness or modulus of the "MP2" sidewall mix in the cured state.

Moreover, the "MPC" mix components are present in such quantities that, in the green state, the "MPC" mix has substantially the same viscosity as the "MP2" sidewall mix in the green state.

In particular, as far as viscosity is concerned, the quantities of the components of the "MPC" mix are to be chosen so as to keep the difference in percentage between the viscosities of "MPC" and "MP2" in the green state as follows, the viscosity being measured using a Mooney-viscometer test method as for ASTM D1646-96a with large rotor at 100 C [ML(1+4) 100C]:

$$[ML(1+4)_{MPC} \ ML(1+4)_{MP2}] \, / \, ML(1+4)_{MP2} = G$$

with G being a percentage always lower than +30% and preferably lower than +10%.

As far as the stiffness or modulus at low strain is concerned, the quantities of the components of the "MPC" mix are to be chosen so as to keep the difference in percentage between the modulus at low strain (0.1 to 10%) of "MPC" and "MP1" in the cured state as follows:

- when using a dynamo mechanical test method for characterisation of modulus at low strain, as for ASTM D5992-96:

$$[G'_{MPC} - G'_{MP1}] / G'_{MP1} = S$$

where:

G' is the shear storage modulus between 0.1 to 10% of strain at a given frequency and at room temperature; and
S is a percentage always lower than 30% and preferably lower than 10% in absolute value.

- when using a durometer hardness test method for characterisation of the stiffness or modulus at low strain, as for ASTM 2240-96:

$$[HD_{MPC} - HD_{MP1}] / HD_{MP1} = B$$

where:

HD is the Shore "A" hardness at room temperature; and
B is a percentage always lower than 10% and preferably lower than 5% in absolute value.

As far as the stiffness or modulus at high strain is concerned, the quantities of the components of the "MPC" mix are to be chosen so as to keep the difference in percentage between the stiffness or modulus at high strain (100%) of "MPC" and "MP2" in the cured state as follows when using a tensile test method for characterisation of stiffness or modulus at high strain, as for ASTM D412-97:

$$[M100_{MPC} - M100_{MP2}] / M100_{MP2} = C$$

where:

M100 is the modulus at 100% elongation; and
C is a percentage always lower than +30% and preferably lower than +10%.

As an example, the physical properties of the mixes in the tread area may be as follows:

| | | MP1 | MP2 | MPC PREFER. | MAX |
|---|---|---|---|---|---|
| UNCURED RUBBER PHYSICAL PROPERTIES | ML$_{1+4}$(100°C) | (80) | 60 | 66< | 78< |
| CURED RUBBER PHYSICAL PROPERTIES | G' (MPa) 1%, 1Hz, R.T. | 60.0 | (30.0) | 54.0÷66.0 | 48.0÷72.0 |
| | HD (SHORE A) | 70 | (55) | 74÷66 | 77÷63 |
| | M100 (MPa) 100 mm/min, R.T. | (2.0) | 1.4 | 1.7< | 2.1< |

Forming shoulders 4 and all other electrically conducting members from the same "MPC" mix greatly simplifies the extrusion process by enabling tires of good conductivity to be produced using only two mixes, i.e. "MP1" for tread 3, and "MPC" for conducting element 8 and shoulders 4.

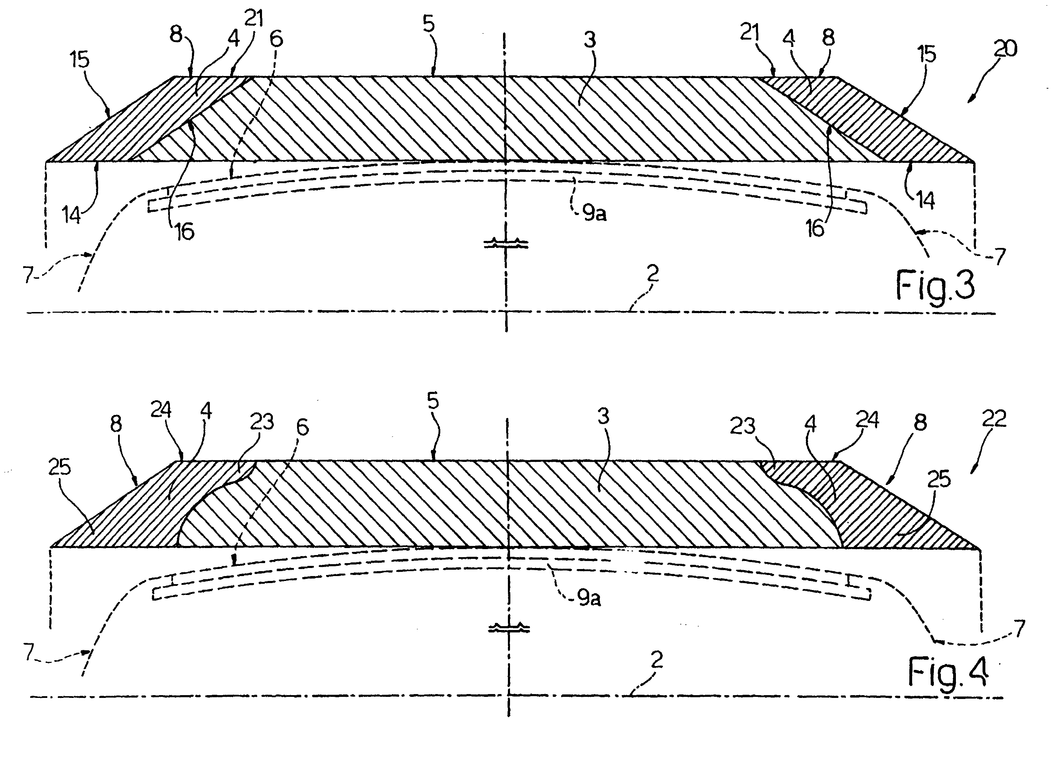

Figure 3 relates to a tire 20 the components of which bear, where possible, the same reference numerals as the corresponding components of tire 1.

In tire 20, base 9 and insert or inserts 10 of tire 1 are absent; the annular peripheral rolling surface 5 has a central portion defined by tread 3, two lateral portions of which are defined by shoulders 4; and conducting element 8 consists solely of shoulders 4.

In order to ensure that shoulders 4 are in contact of the ground in any running condition, shoulders 4 are chosen which are of the so-called "high-volume" type, and are annular in shape with a rhomboidal section. More specifically, each shoulder 4 comprises an outer surface 21 defining part of rolling surface 5; an inner surface 14 parallel to surface 21; an outer lateral surface 15 sloping with respect to axis 2; and an inner lateral surface 16 contacting tread 3 and substantially parallel to surface 15.

Tread 3 is formed from the electrically insulating "MP1" mix described above, shoulders 4 from the electrically conducting "MPC" mix described above, and sidewalls 7 from the normally electrically conducting "MP2" mix described above.

Surface 21 of each shoulder 4 defines an electrically conducting lateral annular portion of rolling surface 5, and provides for establishing electrical contact between the tire and the road surface; and each shoulder 4 contacts respective sidewall 7, which forms a bridge element for electrically connecting the vehicle and shoulder 4.

In Figure 4, a tire 22 is shown, each shoulder 4 of which is a so-called "high-area" shoulder having a substantially L-shaped section, and comprising a tubular portion 23 extending along rolling surface 5 and defined externally by an annular surface 24 defining a respective annular lateral end portion of surface 5. Each shoulder 4 of tire 22 also comprises an annular flange 25 extending radially inwards from an outer edge of portion 23.

## Claims

1. An antistatic tire comprising a tread (3), two sidewalls (7), and two annular shoulders (4), each interposed between the tread (3) and a respective said sidewall (7); the tread (3) and the sidewalls (7) being formed respectively from a first and second mix (MP1, XP2); and the tread (3) defining part of a rolling surface (5), at least an annular portion of which is electrically conducting and has an electrical resistivity of less than $10^9$ ohms x cm; **characterized in that** said electrically conducting portion of the rolling surface (5) is defined by an electrically conducting element (8) formed from a third electrically conducting mix (MPC), which, under 1-10% elongation and in the cured state, has a stiffness or modulus which differs in percentage from the stiffness or modulus of said first mix (MP1) in the cured state less than 10% in absolute value and, under 90-100% elongation, has a stiffness or modulus which differs in percentage from the stiffness or modulus of said second mix (MP2) in the cured state less than +10%.

2. A tire as claimed in Claim 1, **characterized in that** said electrically conducting element (8) includes said shoulders (4).

3. A tire as claimed in Claim 1 or 2, **characterized in that** said electrically conducting element (8) consists of said shoulders (4).

4. A tire as claimed in Claim 1 or 2, **characterized in that** said electrically conducting element (8) comprises said shoulders (4) and an electrically conducting member (9, 10) having an annular surface (11) defining part of said rolling surface (5) and being inserted inside the tread (3); said electrically conducting member (9, 10) and said shoulders (4) being both formed from said third electrically conducting mix (MPC).

5. A tire as claimed in any of the preceding Claims, **characterized in that** said third electrically conducting mix (MPC) has, in the green state, substantially the same viscosity as said second mix (MP2) in the green state.

6. A tire as claimed in Claim 5, **characterized in that** said third electrically conducting mix (MPC)1 in the green state, has a viscosity which differs in percentage from the viscosity of said second mix (MP2) in the green state less than +30%.

7. A tire as claimed in Claim 6, **characterized in that** said third electrically conducting mix (MPC), in the green state, has a viscosity which differs in percentage from the viscosity of said second mix (MP2) in the green state less than +10%.

8. A tire as claimed in any of the preceding Claims, **characterized in that** said third electrically conducting mix (MPC) comprises:

- a polymer system similar to that of said first mix (MP1), so as to manifest a similar type of abrasion;
- a system of high-structure carbon black-based reinforcing fillers; said structure being defined by over 100 ml/ 100 gr absorption of dibutyl phthalate, and the carbon black being in quantities of over 30 phr (parts per 1 of polymer);
- an antioxidation system similar to that of said second mix (MP2);
- plasticizers and activating and curing systems as in normal tire mixes, and in such quantities as to achieve said mechanical characteristics under high and low strain.

9.  A tire as claimed in Claim 8, **characterized in that** the carbon black has a structure such as to absorb over 120 ml/100 gr of dibutyl phthalate.

10. A tire as claimed in any of Claims 4 to 9, **characterized in that** said conducting member (9, 10) comprises at least one annular body having a substantially polygonal section, the sides (11, 12, 13; 11a) of which form angles other than a right-angle with the rolling surface (5).

11. A tire as claimed in Claim 10, **characterized in that** said conducting member (9, 10) is located inside the tread (3), and comprises a base (9) contacting the shoulders (4), and at least one annular insert (10; 10a) projecting from said base (9) and defined externally by said annular surface (11; 11a).

12. A tire as claimed in Claim 11, **characterized in that** said conducting member (9, 10) comprises at least two annular inserts (10a) projecting from said base (9) and defined externally by respective said annular surfaces (11a).

13. A tire as claimed in Claim 2, 3 or 4, **characterized in that** the shoulders (4) are of the so-called "high-volume" type.

14. A tire as claimed in Claim 13, **characterized in that** each shoulder (4) has a substantially rhomboidal section, one surface (21) of which defines a respective annular part of said electrically conducting annular portion of the rolling surface (5).

15. A tire as claimed in Claim 2, 3 or 4, **characterized in that** the shoulders (4) are of the so-called "high-area" type.

16. A tire as claimed in Claim 15, **characterized in that** each shoulder (4) has a substantially L-shaped section, and comprises a tubular portion (23) extending along said rolling surface (5) and defined externally by an annular surface (24) defining a respective annular part of said electrically conducting annular portion of the rolling surface (5).

**Patentansprüche**

1.  Antistatischer Reifen, mit einer Lauffläche (3), zwei Seitenwänden (7) und zwei ringförmigen Randleisten (4), die jeweils zwischen der Lauffläche (3) und einer jeweiligen Seitenwand (7) angeordnet sind; wobei die Lauffläche (3) und die Seitenwände (7) aus einem ersten bzw. zweiten Gemisch (MP1, MP2) gebildet sind; und wobei die Lauffläche (3) einen Teil einer Rollfläche (5) definiert, von der wenigstens ein ringförmiger Abschnitt elektrisch leitend ist und einen Reziprokwert der spezifischen elektrischen Leitfähigkeit von weniger als $10^9 \; \Omega$ cm aufweist; **dadurch gekennzeichnet,** **dass** der elektrisch leitende Abschnitt der Rollfläche (5) durch ein elektrisch leitendes Element (8) definiert ist, das aus einem dritten elektrisch leitenden Gemisch (MPC) gebildet ist, das bei einer Dehnung von 1-10% und im vulkanisierten Zustand eine Strammheit oder ein Modul aufweist, die bzw. das sich prozentual von der Strammheit oder dem Modul des ersten Gemischs (MP1) im vulkanisierten Zustand um weniger als 10% im Absolutwert unterscheidet, und bei einer Dehnung von 90-100% eine Strammheit oder ein Modul aufweist, die bzw. das sich prozentual von der Strammheit oder dem Modul des zweiten Gemischs (MP2) im vulkanisierten Zustand um weniger als +10% unterscheidet.

2.  Reifen nach Anspruch 1, **dadurch gekennzeichnet,** **dass** das elektrisch leitende Element (8) die Randleisten (4) umfasst.

3.  Reifen nach Anspruch 1 oder 2, **dadurch gekennzeichnet,**

**dass** das elektrisch leitende Element (8) aus den Randleisten (4) besteht.

4.  Reifen nach Anspruch1 1 oder 2,
    **dadurch gekennzeichnet,**
    **dass** das elektrisch leitende Element (8) die Randleisten (4) und ein elektrisch leitendes Element (9, 10) mit einer ringförmigen Fläche (11), die einen Teil der Rollfläche (5) definiert und in die Lauffläche (3) eingesetzt ist, aufweist; wobei das elektrisch leitende Element (9, 10) und die Randleisten (4) beide aus dem dritten elektrisch leitenden Gemisch (MPC) gebildet sind.

5.  Reifen nach einem der vorhergehenden Ansprüche,
    **dadurch gekennzeichnet,**
    **dass** das dritte elektrisch leitende Gemisch (MPC) im rohen Zustand im wesentlichen die gleiche Viskosität wie das zweite Gemisch (MP2) im rohen Zustand aufweist.

6.  Reifen nach Anspruch 5,
    **dadurch gekennzeichnet,**
    **dass** das dritte elektrisch leitende Gemisch (MPC) im rohen Zustand eine Viskosität aufweist, die sich prozentual von der Viskosität des zweiten Gemischs (MP2) im rohen Zustand um weniger als +30% unterscheidet.

7.  Reifen nach Anspruch 6,
    **dadurch gekennzeichnet,**
    **dass** das dritte elektrisch leitende Gemisch (MPC) im rohen Zustand eine Viskosität aufweist, die sich prozentual von der Viskosität des zweiten Gemischs (MP2) im rohen Zustand um weniger als +10% unterscheidet.

8.  Reifen nach einem der vorhergehenden Ansprüche,
    **dadurch gekennzeichnet,**
    **dass** das dritte elektrisch leitende Gemisch (MPC) aufweist:

    -   ein Polymersystem ähnlich demjenigen des ersten Gemischs (MPI), um so eine ähnliche Art des Abriebs zu zeigen;
    -   ein System von hochstrukturierten Aktivfüllern auf Carbon Black - Basis, wobei die Struktur durch die Aufnahme von über 100 ml / 100 g Dibutylphthalat definiert ist und das Carbon Black in Mengen von über 30 phr (Teilen je 100 Polymer) vorhanden ist;
    -   ein Antioxidationssystem ähnlich demjenigen des zweiten Gemischs (MP2);
    -   Weichmacher und Aktivierungs- und Vulkanisierungssysteme wie in normalen Reifengemischen und in solchen Mengen, um die mechanischen Eigenschaften unter hoher und niedriger Beanspruchung zu erzielen.

9.  Reifen nach Anspruch 8,
    **dadurch gekennzeichnet,**
    **dass** das Carbon Black eine Struktur derart besitzt, dass es über 120 ml / 100 g Dibutylphthalat aufnimmt.

10.  Reifen nach einem der Ansprüche 4 bis 9,
     **dadurch gekennzeichnet,**
     **dass** das leitende Element (9, 10) wenigstens einen ringförmigen Körper mit einem im wesentlichen polygonalen Querschnitt aufweist, dessen Seiten (11, 12, 13; 11a) andere Winkel als rechte Winkel zu der Rollfläche (5) bilden.

11.  Reifen nach Anspruch 10,
     **dadurch gekennzeichnet,**
     **dass** das leitende Element (9, 10) in der Lauffläche (3) angeordnet ist und eine die Randleisten (4) kontaktierende Basis (9) und wenigstens einen ringförmigen Einsatz (10; 10a), der von der Basis (9) vorsteht und außen durch die ringförmige Fläche (11; 11a) definiert ist, aufweist.

12.  Reifen nach Anspruch 11,
     **dadurch gekennzeichnet,**
     **dass** das leitende Element (9, 10) wenigstens zwei ringförmige Einsätze (10a) aufweist, die von der Basis (9) vorstehen und außen durch jeweilige ringförmige Flächen (11a) definiert sind.

13.  Reifen nach Anspruch 2, 3 oder 4,

**dadurch gekennzeichnet,**
**dass** die Randleisten (4) von dem sogenannten "Großvolumen"-Typ sind.

14. Reifen nach Anspruch 13,
**dadurch gekennzeichnet,**
**dass** jede Randleiste (4) einen im wesentlichen rautenförmigen Querschnitt besitzt, von dem eine Oberfläche (21) einen jeweiligen ringförmigen Teil des elektrisch leitenden ringförmigen Abschnitts der Rollfläche (5) definiert.

15. Reifen nach Anspruch 2, 3 oder 4,
**dadurch gekennzeichnet,**
**dass** die Randleisten (4) von dem sogenannten "Großflächen"-Typ sind.

16. Reifen nach Anspruch 15,
**dadurch gekennzeichnet,**
**dass** jede Randleiste (4) einen im wesentlichen L-förrnigen Querschnitt besitzt und einen röhrenförmigen Abschnitt (23) aufweist, der sich entlang der Rollfläche (5) erstreckt und außen durch eine ringförmige Fläche (24) definiert ist, die einen jeweiligen ringförmigen Teil des elektrisch leitenden ringförmigen Abschnitts der Rollfläche (5) definiert.

**Revendications**

1. Pneumatique antistatique comportant une bande de roulement (3), deux flancs (7), et deux épaulements annulaires (4), chacun interposé entre la bande de roulement (3) et un flanc (7) respectif, 1 la bande de roulement (3) et les flancs (7) étant formés respectivement à partir d'un premier et d'un deuxième mélanges (MP1, MP2), et la bande de roulement (3) définissant une partie d'une surface de roulement (5), dont au moins une partie annulaire est électriquement conductrice et a une résistivité électrique inférieure à $10^9$ ohms $\times$ cm, **caractérisé en ce que** ladite partie électriquement conductrice de la surface de roulement (5) est définie par un élément électriquement conducteur (8) formé à partir d'un troisième mélange électriquement conducteur (MPC), qui, sous un allongement de 1 à 10 % et à l'état durci, a une rigidité ou un module qui diffère en pourcentage de la rigidité ou du module dudit premier mélange (MP1) à l'état durci, de moins de 10 % en valeur absolue et, sous un allongement de 90 à 100 %, a une rigidité ou un module qui diffère en pourcentage de la rigidité ou du' module dudit deuxième mélange (MP2) à l'état durci, de moins de + 10 %.

2. Pneumatique selon la revendication 1, **caractérisé en ce que** ledit élément électriquement conducteur (8) inclut lesdits épaulements (4).

3. Pneumatique selon la revendication 1 ou 2, **caractérisé en ce que** ledit élément électriquement conducteur (8) est constitué desdits épaulements (4).

4. Pneumatique selon la revendication 1 ou 2, **caractérisé en ce que** ledit élément électriquement conducteur (8) comprend lesdits épaulements (4) et un élément électriquement conducteur (9, 10) ayant une surface annulaire (11) définissant une partie de ladite surface de roulement (5) et étant inséré à l'intérieur de la bande de roulement (3), ledit élément électriquement conducteur (9, 10) et lesdits épaulements (4) étant tous deux formés à partir dudit troisième mélange électriquement conducteur (MPC).

5. Pneumatique selon l'une quelconque des revendications précédentes, **caractérisé en ce que** ledit troisième mélange électriquement conducteur (MPC) a, à l'état frais, sensiblement la même viscosité que ledit deuxième mélange (MP2) à l'état frais.

6. Pneumatique selon la revendication 5, **caractérisé en ce que** ledit troisième mélange électriquement conducteur (MPC), à l'état frais, a une viscosité qui diffère en pourcentage de la viscosité dudit deuxième mélange (MP2) à l'état frais, de moins de + 30 %.

7. Pneumatique selon la revendication 6, **caractérisé en ce que** ledit troisième' mélange électriquement conducteur (MPC), à l'état frais, a une viscosité qui diffère en pourcentage à partir de la viscosité dudit deuxième mélange (MP2) à l'état frais, de moins de + 10 %.

**8.** Pneumatique selon l'une quelconque des revendications précédentes, **caractérisé en ce que** ledit troisième mélange électriquement conducteur (MPC) comporte :

- un système polymère similaire à celui dudit premier mélange (MP1), de manière à manifester un type d'abrasion similaire,
- un système de charges de renforcement à base de noir de carbone à haute structure, ladite structure étant définie par une absorption de plus de 100 ml/100 g de phtalate de dibutyle, et le noir de carbone étant en quantités supérieures à 30 phr (parties par 100 de polymère),
- un système antioxydant similaire à celui dudit deuxième mélange (MP2),
- des systèmes plastifiants et d'activation et de durcissement comme dans des mélanges de pneumatiques normaux, et dans des quantités telles qu'on obtient lesdites caractéristiques mécaniques sous une contrainte élevée et faible.

**9.** Pneumatique selon la revendication 8, **caractérisé en ce que** le noir de carbone a une structure telle qu'il absorbe plus de 120 ml/100 g de phtalate de dibutyle.

**10.** Pneumatique selon l'une quelconque des revendications 4 à 9, **caractérisé en ce que** ledit élément conducteur (9, 10) comprend au moins un corps annulaire ayant une coupe sensiblement polygonale, dont les côtés (11, 12, 13 ; 11a forment des angles autre qu'un angle droit avec la surface de roulement (5).

**11.** Pneumatique selon la revendication 10, **caractérisé en ce que** ledit élément conducteur (9, 10) est situé à l'intérieur de la bande de roulement (3), et comporte une base (9) en contact avec les épaulements (4), et au moins un élément rapporté annulaire (10 ; 10a) faisant saillie à partir de ladite base (9) et défini extérieurement par ladite surface annulaire (11 ; 11a).

**12.** Pneumatique selon la revendication 11, **caractérisé en ce que** ledit élément conducteur, (9, 10) comprend au moins deux éléments rapportés annulaires (10a) faisant saillie à partir de ladite base (9) et définis extérieurement par lesdites surfaces annulaires respectives (11a).

**13.** Pneumatique selon la revendication 2, 3 ou 4, **caractérisé en ce que** les épaulements (4) sont du type appelé "à grand volume".

**14.** Pneumatique selon la revendication 13, **caractérisé en ce que** chaque épaulement (4) a une coupe sensiblement en losange, dont une surface (21) définit une partie annulaire respective de ladite partie annulaire électriquement conductrice de la surface de roulement (5).

**15.** Pneumatique selon la revendication 2, 3 ou 4, **caractérisé en ce que** les épaulements (4) sont du type appelé "à grande surface".

**16.** Pneumatique selon la revendication 15, **caractérisé en ce que** chaque épaulement (4) a une coupe sensiblement en forme de L, et comporte une partie tubulaire (23) s'étendant le long de ladite surface de roulement (5) et définie extérieurement par une surface annulaire (24) définissant une partie annulaire respective de ladite partie annulaire électriquement conductrice de la surface de roulement (5).

Fig.1

Fig.2

Fig.3

Fig.4

EP 0 872 360 B1